Europäisches Patentamt

European Patent Office

Office européen des brevets

(19)

(11) Numéro de publication : **0 013 233**
**B1**

# (12) FASCICULE DE BREVET EUROPÉEN

(45) Date de publication du fascicule du brevet :
**01.09.82**

(21) Numéro de dépôt : **79401055.3**

(22) Date de dépôt : **21.12.79**

(51) Int. Cl.³ : **A 47 D  1/00**, A 47 D  1/10, A 47 D 13/00

(54) **Support pour siège d'enfant.**

(30) Priorité : **22.12.78 FR 7836176**

(43) Date de publication de la demande :
**09.07.80 (Bulletin 80/14)**

(45) Mention de la délivrance du brevet :
**01.09.82 Bulletin 82/35**

(84) Etats contractants désignés :
**AT BE CH DE GB IT LU NL SE**

(56) Documents cités :
**DE B 1 285 702**
**FR A 2 227 719**

(73) Titulaire : **BABY RELAX Société anonyme dite:**
**Route du B.A.B.**
**F-64600 Anglet (FR)**

(72) Inventeur : **Deloustal, Bernard Roger**
**181, Avenue de l'Adour**
**F-64600 Anglet (FR)**

(74) Mandataire : **Robert, Jean-Pierre et al**
**CABINET BEAU DE LOMENIE 55, rue d'Amsterdam**
**F-75008 Paris (FR)**

Imprimerie Jouve, 18, rue St-Denis, 75001 Paris, France

Support pour siège d'enfant

La plupart des sièges pour enfant, qu'ils soient en deux parties inclinables l'une par rapport à l'autre ou non, sont équipées d'un piètement tubulaire pour son maintien au sol ou sur une surface horizontale. Généralement, ce piètement permet, notamment pour les sièges en une partie, d'incliner le siège au moyen de divers points possibles d'attelage prévus entre eux. Ce piètement est également amovible notamment dans le cas où le siège est destiné à être placé dans une voiture automobile.

Ces dispositifs connus présentent de nombreux inconvénients. Tout d'abord, l'amovibilité quand elle existe, nécessite un démontage qui sans être complexe, comporte plusieurs opérations à effectuer et est de ce fait, relativement long. En outre, la nature tubulaire de ces piètements ne leur confère pas un très grand caractère esthétique. Enfin, les normes de sécurité actuellement en vigueur ont engendré une partition dans les sièges pour enfants : ceux destinés au transport automobile et ce, de manière quasi exclusive donc sans possibilité d'être montés sur un piètement, et ceux destinés aux autres usages, donc possédant presque tous un piètement fixe.

On connaît par le brevet allemand DE-B-1 285 702 un siège constitué d'une coupe pourvue à sa partie inférieure d'une partie saillante qui peut être logée dans un évidement incliné, de forme correspondante, dans une embase. La partie saillante est en fait un axe de tourillonnement dans un logement cylindrique qui est centré par rapport au siège si bien que le point d'application de la charge est soit sensiblement centré sur l'axe soit, par glissement de l'enfant, à l'avant du siège, par rapport à cet axe, une butée avant encaissant alors cette charge déportée.

La présente invention entend d'une part remédier à ces inconvénients et d'autre part, apporter une solution rationnelle et de mise en œuvre très simple à l'absence de piètement des sièges de sécurité pour enfant, qui s'inspire de cette solution antérieure. Cependant, la structure des sièges de sécurité est telle que la fixation sur un piètement ne peut pas être réalisée de manière équilibrée pour le siège et il faut prévenir les risques de basculement notamment vers l'arrière.

A cet effet, elle a pour objet un ensemble de support pour enfant, comportant un siège pourvu à sa partie inférieure d'un piètement, constitué par une embase possédant à sa partie supérieure un évidement pour recevoir de manière amovible, une partie en saillie de forme sensiblement complémentaire de celle de l'évidement portée par la partie inférieure de l'assise du siège. Selon l'invention, la partie en saillie et l'évidement susdits possèdent chacun au moins deux flancs parallèles avant et arrière inclinés vers l'avant et vers le bas du siège et de l'embase de manière que la partie en saillie présente à l'avant un angle saillant, l'évidement présentant à l'avant un angle rentrant correspondant, tandis qu'un organe de verrouillage de ladite partie en saillie dans ledit évidement est disposé entre le piètement et l'assise du siège.

Dans un mode préféré de réalisation de l'invention, l'organe de verrouillage est constitué par un doigt mobile monté à coulissement dans l'embase entre une première position dans laquelle l'une de ses extrémités se projette dans l'évidement susdit et une seconde position dans laquelle ladite extrémité est escamotée à l'intérieur de ladite embase tandis que la partie en saillie susdite possède un logement ouvert latéralement, placé en correspondance avec le doigt mobile et susceptible de recevoir l'extrémité susdite du doigt.

Dans ce mode de réalisation, le doigt et le logement susdits sont disposés au travers des flancs arrière de respectivement l'évidement de l'embase et la partie en saillie du siège.

De manière avantageuse, un organe élastique de rappel est attelé entre ledit doigt et ladite embase et a pour effet de placer le doigt dans la première position susdite tandis qu'un organe de manœuvre du doigt à l'encontre de l'effet dudit organe élastique est attelé audit doigt et accessible par l'utilisateur depuis l'extérieur de l'embase.

Plus précisément, l'organe de manœuvre susdit est constitué par un levier disposé à l'intérieur de l'embase et articulé à cette dernière par sa partie médiane, l'une de ses extrémités coopérant avec un moyen d'entraînement en coulissement du doigt susdit tandis que son autre extrémité est conformée en une pédale faisant saillie à l'extérieur de l'embase.

Enfin, pour assurer une grande stabilité à l'ensemble, notamment lorsque le dossier du siège est inclinable par rapport à son assise, l'évidement est décalé vers l'avant de l'embase.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :

la figure 1 est une vue générale de l'ensemble selon l'invention,

la figure 2 est une coupe à échelle plus importante du dispositif de liaison du siège et du piètement.

En se reportant à ces figures, on voit un siège 1 pour enfant, comportant une assise 2 et un dossier 3, le dossier étant dans ce cas de figure inclinable par rapport à l'assise. Ce siège est susceptible d'être reçu par un piètement 4 en forme d'embase possédant une grande base inférieure 4a et une petite base supérieure 4b sensiblement parallèles entre elles et une paroi latérale 4c reliant ces deux bases. La forme de ces bases peut être quelconque (circulaire ou polygonale) et l'embase définit un volume creux qui peut être ouvert du côté de sa base 4a.

Le siège 1 comporte à la partie inférieure de son assise 2, une partie en saillie 5 tandis que la petite base 4b susdite est pourvue d'un évidement 6, pour recevoir ladite partie en saillie. La partie 5 possède au moins deux flancs latéraux sensiblement parallèles 5a et 5b situés à l'avant et à l'arrière de la saillie et inclinés vers l'avant du siège. De même, l'évidement 6 possède au moins deux flancs latéraux parallèles 6a et 6b inclinés de la même manière, vers l'avant de l'embase. Les autres surfaces latérales de la partie 5 ou de l'évidement 6 peuvent être cylindriques, coniques ou être constituées par des flancs plans convergents vers le bas.

On voit par cette disposition, que l'évidement 6 possède à l'avant un angle rentrant dans lequel vient se loger l'angle saillant avant de la partie 5, ce qui permet de retenir le siège dans le piètement lorsque le siège est sollicité en basculement vers l'arrière.

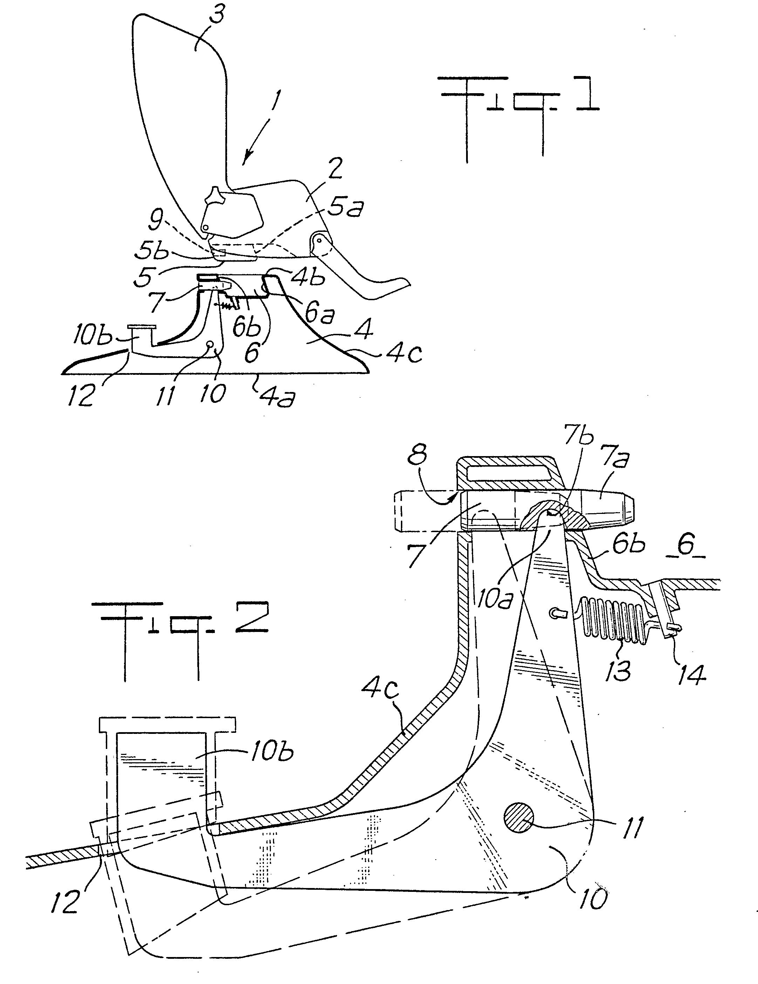

L'embase est en outre pourvue d'un doigt 7, monté à coulissement dans un orifice 8 ménagé dans la partie supérieure de l'embase. Dans une première position, représentée en trait plein sur la figure 2, le doigt 7 fait saillie par son extrémité 7a est logée dans l'orifice 8. L'orifice 8 susdit est prévu dans le mode de réalisation illustré par les figures de manière à déboucher dans l'évidement 6 au travers de la paroi arrière 6b de ce dernier ; il peut cependant être situé dans n'importe quelle autre position à l'exception d'être situé de manière à déboucher au travers des flancs 6a de l'évidement formant angle rentrant.

La partie en saillie 5 est pourvue quant à elle d'un logement 9 qui se trouve dans le prolongement de l'orifice 8 quand le siège est placé sur son embase. Ce logement 9 peut donc recevoir l'extrémité 7a du doigt 7 qui constitue organe de verrouillage du siège sur l'embase et moyen de retenue du siège à l'encontre d'un mouvement de basculement vers l'avant.

Le doigt 7 peut être soumis à l'effet d'un organe élastique de rappel tendant à le placer dans sa position de verrouillage, c'est-à-dire dans sa position où son extrémité 7a se projette à l'intérieur de l'évidement 6. Ainsi, le verrouillage est obtenu automatiquement par simple mise en place du siège sur l'embase. Dans ce cas, il est nécessaire de prévoir un organe de manœuvre manuelle du doigt 7 pour son déplacement à l'encontre de l'effet de l'organe de rappel. La figure 2 illustre un mode préféré de réalisation de la commande du doigt de verrouillage 7. Un levier 10 coudé est articulé en 11 sur l'embase 4. L'une de ses extrémités 10a est engagée dans une encoche 7b du doigt 7 tandis que son autre extrémité 10b est accessible depuis l'extérieur de l'embase et traverse la paroi latérale par un orifice 12. Cette extrémité 10b est conformée en une pédale. L'organe élastique de rappel est ici constitué par un ressort 13 attelé entre le levier et un point d'ancrage 14, solidaire de l'embase, son effet étant de tirer le levier dans une position pour laquelle d'une part le doigt 7 fait saillie dans l'évidement 6 et d'autre part la pédale 10b est dans sa position de sortie maximum.

On voit donc qu'avec les dispositions de verrouillage ci-dessus décrites, il suffit d'actionner au pied la pédale dans le sens de son enfoncement pour libérer le siège qu'il suffit de sortir de l'évidement 6. En revanche, lors de la mise en place, il n'est pas besoin d'actionner le levier, la partie en saillie 5 provoquant la rentrée du doigt 7 à son passage jusqu'à ce qu'il puisse s'engager dans le logement 9.

Il faut noter enfin que pour augmenter la stabilité de l'ensemble de support, la grande base 4a est décalée vers l'arrière par rapport à la petite base 4b. Ainsi, on prévient un déplacement de la répartition du poids du corps de l'enfant vers l'arrière, notamment dans le cas où l'on incline le dossier du siège, enfin l'évidement 6 peut être décalé vers l'avant de l'embase.

L'invention trouve une application intéressante dans le domaine de la fabrication des articles de puériculture.

Elle n'est pas limitée à la description qui vient d'en être donnée mais couvre au contraire, toutes les variantes qui pourraient lui être apportées sans sortir de son cadre ni de son esprit.

## Revendications

1. Ensemble de support pour enfant, comportant un siège (1) pourvu à sa partie inférieure d'un piètement (4), constitué par une embase possédant, à sa partie supérieure, un évidement (6) pour recevoir de manière amovible, une partie (5) en saillie, de forme sensiblement complémentaire de celle de l'évidement (6) portée par la partie inférieure de l'assise (2) du siège, caractérisé en ce que la partie en saillie (5) et l'évidement (6) susdits possèdent chacun au moins deux flancs (5a, 5b), (6a, 6b) parallèles avant et arrière inclinés vers l'avant et vers le bas du siège (1) et de l'embase (4) de manière que la partie en saillie (5) présente à l'avant un angle saillant, l'évidement (6) présentant à l'avant un angle rentrant correspondant, tandis qu'un organe de verrouillage (7) de ladite partie en saillie (5) dans ledit évidement (6) est disposé entre le piètement (4) et l'assise (2) du siège.

2. Ensemble de support pour enfant selon la revendication 1, caractérisé en ce que l'organe de verrouillage est constitué par un doigt mobile (7) monté à coulissement dans l'embase (4) entre une première position dans laquelle l'une de ses extrémités (7a) se projette dans l'évidement (6) susdit et une seconde position dans laquelle ladite extrémité (7a) est escamotée à l'intérieur de ladite embase (4) tandis que la partie en saillie (5) susdite possède un logement (9) ouvert latéralement, placé en correspondance avec le doigt mobile (7) et susceptible de recevoir l'extrémité (7a) susdite du doigt (7).

3. Ensemble de support pour enfant selon la revendication 2, caractérisé en ce que le doigt (7) et le logement (9) susdits sont disposés au travers des flancs (6b, 5b) arrière de respectivement l'évidement (6) de l'embase (4) et de la partie en saillie (5) du siège (1).

4. Ensemble de support pour enfant selon l'une quelconque des revendications 2 et 3, caractérisé en ce qu'un organe élastique de rappel (13) est attelé entre ledit doigt (7) et ladite embase (4) et a pour effet de placer le doigt (7) dans la première position susdite tandis qu'un organe (10) de manœuvre du doigt (7) à l'encontre de l'effet dudit organe élastique (13) est attelé audit doigt (7) et accessible par l'utilisateur depuis l'extérieur de l'embase (4).

5. Ensemble de support pour enfant selon la revendication 4, caractérisé en ce que l'organe de manœuvre (10) susdit est constitué par un levier (10) disposé à l'intérieur de l'embase (4) et articulé en (11) à cette dernière par sa partie médiane, l'une de ses extrémités (10a) coopérant avec un moyen (7b) d'entraînement en coulissement du doigt (7) susdit tandis que son autre extrémité est conformée en une pédale (10b) faisant saillie à l'extérieur de l'embase (4).

6. Ensemble de support pour enfant selon l'une quelconque des revendications précédentes, caractérisé en ce que l'évidement (6) susdit est décalé vers l'avant de l'embase (4).

**Claims**

1. A child's support assembly, comprising a seat (1) provided at its lower part with a support stand (4) consisting of a base which is hollowed out (6) in its upper part so as to removably receive a projecting part (5) whose shape substantially complements that of the hollowed part (6) and which is provided at the bottom of the seating portion (2) of the seat, characterized in that the said projecting (5) and hollowed (6) parts are each provided with at least two parallel back and front walls (5a, 5b), (6a, 6b) inclined towards the front of the seat (1) and of the base (4), in such a way that the projecting part (5) presents at the front, a projecting angle, the hollow part presenting on the front a corresponding re-entrant angle, whereas a member for locking (7) the said projecting part (5) in the said hollow part (6) is provided between the support (4) and the seating (2) portion of the seat.

2. A child's support assembly as claimed in claim 1, characterized in that the locking member consists in a movable finger (7), mounted for sliding in the base (4) between a first position in which one of its ends (7a) projects inside the said hollowed part (6) and a second position in which the said end (7a) is retracted inside the said base (4) whereas the said projecting part (5) comprises a laterally open recess (9) correspondingly situated with respect to the movable finger (7) and adapted to receive the said end (7a) of the finger.

3. A child's support assembly as claimed in claim 2, characterized in that the said finger (7) and recess (9) are disposed crosswise of the rear walls (6b, 5b) of the hollowed part (6) of the base (4) and of the projecting part (5) of the seat (1), respectively.

4. A child's support assembly as claimed in claims 2 or 3, characterized in that a resilient return member (13) is coupled between the said finger (7) and the said base (4) and its effect is to place the finger (7) in the afore said first position whereas a member (10) for operating the finger (7) against the effect of the said resilient member (13) is coupled to the said finger (7) and can be reached by the user from the outside of the base (4).

5. A child's support assembly as claimed in claim 4, characterized in that the said operating member (10) is constituted by a lever (10) fitted inside the said base (4) and pivotally connected in (11) thereto by its median part, one of its ends (10a) cooperating with means (7b) for causing the said finger (7) to slide, whereas its other end is shaped as a pedal (10b) which projects outside the said base (4).

6. A child's support assembly as claimed in any of the preceding claims, wherein the said hollow (6) part in shifted towards the front of the base (4).

**Ansprüche**

1. Stützkonstruktion für ein Kind, mit einem Sitz (1), der an seinem Unterteil mit einem Fuß (4), gebildet durch eine Grundplatte, versehen ist, welche in ihrem Oberteil eine Ausnehmung (6) zur lösbaren Aufnahme eines am Unterteil der Sitzplatte (2) des Sitzes vorgesehenen vorspringenden Teils (5) von im wesentlichen zu jener der Ausnehmung (6) komplementärer Gestalt besitzt, dadurch gekennzeichnet, daß der vorspringende Teil (5) und die Ausnehmung (6) jeweils zumindest zwei parallele Vorder- und Hinterflanken (5a, 5b), (6a, 6b) besitzen, die nach vorne und zur Unterseite des Sitzes (1) und der Grundplatte (4) derart geneigt sind, daß der vorspringende Teil (5) vorne eine vorspringende Ecke und die Ausnehmung (6) vorne eine entsprechende einspringende Ecke aufweist, wobei ein Element (7) zur Verriegelung des vorspringenden Teils (5) in der Ausnehmung (6) zwischen dem Fuß (4) und der Sitzplatte (2) des Sitzes angeordnet ist.

2. Stützkonstruktion für ein Kind nach Anspruch 1, dadurch gekennzeichnet, daß das Verriegelungselement durch einen beweglichen Zapfen (7) gebildet ist, der in der Grundplatte (4) zwischen einer ersten Position, in welcher eines seiner Enden (7a) in die Ausnehmung (6) ragt, und einer zweiten Position, in welcher das Ende (7a) in das Innere der Grundplatte (4) eingezogen ist, gleitend gelagert ist, wobei der vorspringende Teil (5) eine seitlich offene, entsprechend dem beweglichen Zapfen (7) angeordnete und das Ende (7a) des Zapfens (7) aufnehmbare Aufnahme (9) besitzt.

3. Stützkonstruktion für ein Kind nach Anspruch 2, dadurch gekennzeichnet, daß der Zapfen (7) und die Aufnahme (9) quer durch die Hinterflanken (6b, 5b) der Ausnehmung (6) der Grundplatte (4) bzw. des vorspringenden Teils (5) des Sitzes (1) angeordnet sind.

4. Stützkonstruktion für ein Kind nach einem der Ansprüche 2 und 3, dadurch gekennzeichnet, daß ein elastisches Rückholelement (13) zwischen dem Zapfen (7) und der Grundplatte (4) eingehängt ist und dazu dient, den Zapfen (7) in die erste Position zu bringen, wobei ein dem elastischen Element (13) entgegenwirkendes Element (10) zur Betätigung des Zapfens (7) am Zapfen (7) gekuppelt und von außerhalb der Grundplatte (4) für den Benützer zugänglich ist.

5. Stützkonstruktion für ein Kind nach Anspruch 4, dadurch gekennzeichnet, daß das Betätigungselement (10) durch einen im Inneren der Grundplatte (4) vorgesehenen und in (11) mit einem Mittelteil an diese angelenkten Hebel (10) gebildet ist, wobei eines seiner Enden (10a) mit einem Mittel (7b) zum Verschieben des Zapfens (7) zusammenwirkt, wobei sein anderes Ende die Gestalt eines Pedals (10b) hat, das an der Außenseite der Grundplatte (4) vorspringt.

6. Stützkonstruktion für ein Kind nach einem der vorhergehenden Ansprüche, dadurch gekennzeichnet, daß die Ausnehmung (6) zur Vorderseite der Grundplatte (4) hin versetzt ist.

Fig. 1

Fig. 2